# EUROPEAN PATENT SPECIFICATION

(11) **EP 0 698 626 B1**
(45) Date of publication and mention of the grant of the patent: **16.12.1998**
(21) Application number: 95202186.3
(22) Date of filing: 10.08.1995
(51) Int. Cl.: C08F 297/04, C08F 8/04, C08L 53/02, C10M 143/12

(54) **Asymmetric triblock copolymer, viscosity index improver for oil compositions**
Asymmetrisches Triblockcopolymer, Viscositätsindex-Verbesser für Ölzusammensetzungen
Copolymère tribloc asymétrique, agent améliorant l'indice de viscosité pour compositions d'huile

(30) Priority: 11.08.1994 US 289487
(43) Date of publication of application: 28.02.1996
(73) Proprietor: SHELL INTERNATIONALE RESEARCH MAATSCHAPPIJ B.V., 2596 HR Den Haag (NL)
(72) Inventor: Rhodes, Robert Barnett, Houston, TX 77070 (US); Stevens, Craig Aldred, Houston, TX 77094 (US)

(56) References cited:
- US-A- 4 788 361
- US-A- 5 302 667

## Description

The present invention relates to copolymers useful as viscosity index improvers, a process for their preparation, and to lubricating oil compositions and lubricating oil concentrates containing them.

The viscosity of lubricating oil compositions varies with temperature. In general, lubricating oil compositions are identified by a viscosity index which is a function of the lubricating oil composition kinematic viscosity at a given lower temperature and a given higher temperature. The given lower temperature and the given higher temperature have varied over the years but are fixed at any given time in an ASTM test procedure (ASTM D2270). Currently, the lower temperature specified in the test is 40°C and the higher temperature specified in the test is 100°C. For two engine lubricating oil compositions with the same kinematic viscosity at 100°C, the one having the lower kinematic viscosity at 40°C will have the higher viscosity index. The lubricating oil composition with the higher viscosity index undergoes less kinematic viscosity change between the temperature of 40°C and 100°C. In general, viscosity index improvers that are added to engine lubricating oil composition increase the viscosity index as well as the kinematic viscosities.

The limitation on the amount of polymer than can be used in a VI improver concentrate is dependent on the concentrate's viscosity at storage and handling temperatures. Sufficient fluidity must be maintained so that the concentrate can be readily pumped from the storage vessel into the oil blending vessel. The amount of polymer that can be added to a concentrate to ensure handleability can be determined by measuring the low-shear rate viscosity of the oil concentrate.

Engine power losses are generally reduced when viscous friction is reduced through a reduction in an engine lubricant's HTHSR viscosity. This manifests itself in improved fuel efficiency. However, to ensure adequate engine journal bearing protection, minimum HTHSR viscosity limits are now included in SAE Standard J300, which defines the viscosity grading system for SAE grade designations. (The present version of the Standard is SAE J300, revision MAR93.)

One approach to the obtainment of improved fuel efficiency within a particular SAE grade is to formulate with a VI improver that contributes enough HTHSR viscosity so that the resultant engine oil is above the HTHSR viscosity minimum defined by SAE J300, but close to the minimum. Using such an approach, VI improvers such as those disclosed in US-A-3,775,329 which offer a relatively high contribution to kinematic viscosity at 100°C (kinematic viscosity limits are also included in SAE J300), and a relatively low contribution to HTHSR viscosity are preferred. Two polymers representative of this prior art are given in examples 6c and 12c of this document. US-A-3,772,196 discloses linear block copolymers of styrene (S) and hydrogenated polyisoprene (EP), having the structure S-EP.

In comparison to the S-EP polymers, a different balance between thickening efficiency, and HTHSR viscosity has been achieved with linear triblock copolymers of styrene (S) and hydrogenated isoprene (EP) having the block structure EP-S-EP as described in US-A-4,788,361. However, the EP-S-EP copolymers provide substantially higher HTHSR viscosities than the S-EP copolymers described in US-A-3,775,329. For fuel economy savings, however, the S-EP polymers are preferred, provided that their HTHSR viscosity contributions are sufficient to meet SAE J300 requirements. The EP-S-EP polymers described in US-A-4,788,361 are illustrated by symmetric polymers although said document places no limitations on the relative sizes of the first and second EP blocks.

The present invention relates to asymmetric triblock copolymers useful as viscosity index improvers in lubricating oil compositions. The triblock copolymers have the block structure hydrogenated polyisoprene-polystyrene-hydrogenated polyisoprene (EP-S-EP) wherein the first EP block has a number average molecular weight at least 4 times greater than the number average molecular weight of the second EP block. The difference in EP block sizes significantly reduces the HTHSR viscosity of lubricating oil compositions in comparison to EP-S-EP block copolymers having similarly sized EP number average molecular weights. The contribution of the asymmetric triblock EP-S-EP polymers to HTHSR viscosity is comparable to that of prior art S-EP polymers, and sufficient for the making of SAE multigrade engine lubricants. The differences in EP block sizes does not adversely impact other properties needed for good performance, but facilitates dissolution of the polymer into lubricating oil to make lubricating oil concentrates which contain more polymer and are more fluid than those containing S-EP copolymers.

Accordingly, the present invention provides an asymmetric triblock copolymer, useful as a viscosity index (VI) improver, comprising polystyrene blocks and hydrogenated polyisoprene blocks combined in molecules having the structure EP'-S-EP", wherein EP' is a first block of hydrogenated polyisoprene having a number average molecular weight (Mₙ) between 40,000 and 150,000 before hydrogenation, S is a block of polystyrene having a number average molecular weight (Mₙ) between 25,000 and 60,000, EP'' is a second block of hydrogenated polyisoprene having a number average molecular weight (Mₙ) between 2,500 and 30,000 before hydrogenation and wherein the molecular weight ratio of EP'/EP" is at least 4.

The triblock copolymer is suitably selectively hydrogenated to saturate at least 95% by weight of the polymerised isoprene units and less than 15% by weight of the polymerised styrene units.

The polymers of the present invention are readily produced by a method as described in US-A-4,788,361. However, the polymers of the present invention have molecular weights which are not taught by said reference and are selected to obtain surprisingly improved performance as a viscosity index improver, especially in terms of their ease of blending and handleability as viscosity index lubricating oil concentrates.

The polymers of this invention which are useful as VI improvers are preferably prepared by anionically polymerising isoprene in the presence of sec-butyllithium, adding styrene, and then more isoprene to the living polystyrene molecules to make the living block copolymer molecules, and selectively hydrogenating the polyisoprene blocks. The present invention further provides an asymmetric triblock copolymer comprising polystyrene blocks (S) and unhydrogenated polyisoprene blocks (EP) combined in molecules having the structure EP'-S-EP",
wherein EP' is a first block of unhydrogenated polyisoprene having a number average molecular weight between 40,000 and 150,000,
S is a block of polystyrene having a number average molecular weight between 25,000 and 60,000,
EP" is second block of unhydrogenated polyisoprene having a number average molecular weight between 2,500 and 30,000, and wherein the molecular weight ratio of EP'/EP" is at least 4.

In general, the polymers of the invention may be selectively hydrogenated to saturate the unhydrogenated polyisoprene blocks using any of the techniques known in the art to be suitable for selective hydrogenation of olefinic unsaturation over aromatic unsaturation. The hydrogenation conditions are suitably selected to hydrogenate at least 95% of the original olefinic unsaturation. Hydrogenation of aromatic unsaturation is suitably less than 15% to avoid reduction of the amount of polystyrene needed to give desired thickening efficiency.

In general, hydrogenation involves the use of a suitable catalyst as described for instance in US-E-27,145. A mixture of nickel ethylhexanoate and triethylaluminium having 2.3 moles of aluminium per mole of nickel is preferred.

The hydrogenated polymers of this invention may be added to a variety of lubricating oil compositions to improve viscosity index characteristics.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids and automatic transmission fluids.

Preferably the lubricating base oil component of the compositions according to the present invention is a mineral lubricating oil or a mixture of mineral lubricating oils, such as those sold by member companies of the Royal Dutch/Shell Group under the designations "HVI", or "XHVI" (Trade Mark).

The viscosity of the lubricating base oils present in the compositions according to the present invention may vary within wide ranges, and is generally from 3 to 35 mm²/s at 100°C.

Accordingly, the present invention also provides a lubricating oil composition comprising a major amount (more than 50%w) of a lubricating oil and a minor amount (less than 50%w), preferably from 0.05 to 10%w, more preferably from 0.2 to 5%w, and especially from 0.5 to 2.5%w, of a triblock copolymer according to the present invention, all percentages by weight based on total composition.

The present invention still further provides a lubricating oil concentrate comprising from 10 to 80%w, based on total concentrate, of a triblock copolymer according to the invention. Such a concentrate generally comprises an inert carrier fluid, e.g. a lubricating oil, and one or more additives in a concentrated form.

Lubricating oil compositions prepared with the present selectively hydrogenated polymers may also contain other additives such as anti-corrosive additives, antioxidants, detergents, pour point depressants, one or more additional VI improvers and the like. Typical additives which are useful in the lubricating oil compositions according to the present invention are described in US-A-3,772,196 and US-A-3,835,083.

In a preferred embodiment of the present invention, the polystyrene blocks and the hydrogenated isoprene blocks are combined in molecules having the structure EP'-S-EP", wherein the first hydrogenated block of polyisoprene has a number average molecular weight between 50,000 and 110,000 before hydrogenation, the polystyrene block has a number average molecular weight between 35,000 and 50,000, the second hydrogenated block of polyisoprene having a number average molecular weight between, 3,000 and 18,000 before hydrogenation, and wherein the molecular weight ratio of EP'/EP" is between 6.0 and 25.

The polymers can selectively be hydrogenated with a solution of nickel ethylhexanoate and triethylaluminium having a preferred Al/Ni molar ratio of 2.3:1 to saturate at least 90% of the isoprene units and less than 10% of the styrene units.

The present invention will now be illustrated by means of the following examples.

### Example 1

In this example, a triblock copolymer of hydrogenated isoprene and styrene was prepared. In the first step of the preparation, living polyisoprene blocks were prepared by anionically polymerising isoprene in cyclohexane. The polymerisation of the isoprene was initiated by adding sec-butyllithium. The polymerisation of the isoprene was completed to produce living polyisoprene blocks having a number average molecular weight of 60,900. Polystyrene blocks were then formed by adding styrene to the solution of living polyisoprene blocks. The polymerisation of styrene was completed to produce polystyrene blocks having a number average molecular weight of 42,100. Polyisoprene blocks were then formed by adding isoprene to the solution of living polyisoprene-polystyrene blocks. The second polymerisation of isoprene was completed to produce second polyisoprene blocks having a number average molecular weight of 9,100. The lithium sites remaining in the polymer were deactivated by adding an alcohol.

The polymer was next hydrogenated so as to saturate more than 98% of the olefinic unsaturation originally contained in the isoprene blocks and less than 15% of the aromatic unsaturation using a catalyst prepared by combining nickel ethylhexanoate and triethylaluminium (2.3 moles of aluminium per mole of nickel). The melt viscosity of the polymer was 4.9 megapoise (x 10⁵Pa s) at 121°C. The data and result are summarised in Table 1.

### Example 2

In this example, a triblock copolymer was prepared using the procedure described in Example 1 except that the number average molecular weight of the second polyisoprene block was 14,300. The melt viscosity of the polymer was 3.4 megapoise (x 10⁵ Pa s)at 121°C. The data and results are summarised in Table 1.

### Example 3

In this example, a triblock copolymer was prepared using the procedure described in Example 1 except that the number average molecular weight of the second polyisoprene block was 3,700. The data and results are summarised in Table 1.

### Example 4 (Comparison)

In this comparative example, a diblock copolymer was prepared using the procedure described in Example 1 except that the second addition of isoprene was omitted. The melt viscosity of the polymer was 4.3 megapoise (x 10⁵ Pa s) at 121°C. The data and results are summarised in Table 1.

### Example 5

In this example, a triblock copolymer was prepared using the procedure described in Example 1 except that the number average molecular weight of the first polyisoprene block was 60,800, the number average molecular weight of the polystyrene block was 38,000, and the number average molecular weight of the second polyisoprene block was 6,400. The melt viscosity of the polymer was 2.5 megapoise (x 10⁵ Pa s) at 121°C. The data and results are summarised in Table 1.

### Example 6 (Comparison)

In this comparative example, a diblock copolymer was prepared using the procedure described in Example 1 except that the number average molecular weight of the first polyisoprene block was 62,000, the number average molecular weight of the polystyrene block was 36,000, and the number average molecular weight of the second addition of isoprene was omitted. The melt viscosity was 1.7 megapoise (x 10⁵ Pa s) at 121°C. Compositional data are summarised in Table 1.

### Example 7 (Comparison)

In this comparative example, a triblock copolymer was prepared using the procedure described in Example 1 except that the number average molecular weight of the first polyisoprene block was 66,100, the number average molecular weight of the polystyrene block was 33,100, and the number average molecular weight of the second polyisoprene block was 68,600. The melt viscosity of the polymer was 2.4 megapoise (x 10⁵ Pa s) at 121°C. Compositional data and melt viscosity results are summarised in Table 1.

### Example 8

In this example, a triblock copolymer was prepared using the procedure described in Example 1 except that the number average molecular weight of the first polyisoprene block was 106,700, the number average molecular weight of the polystyrene block was 49,100, and the number average molecular weight of the second polyisoprene block was 14,100. The melt viscosity of the polymer was 5 megapoise (x 10⁵ Pa s) at 121°C. Compositional data and melt viscosity results are summarised in Table 1.

### Example 9

In this example, a triblock copolymer was prepared using the procedure described in Example 8 except that the number average molecular weight of the second polyisoprene block was 19,000. The melt viscosity of the polymer was 4.4 megapoise (x 10⁵ Pa s) at 121°C. Compositional data and melt viscosity results are summarised in Table 1.

### Example 10

In this example, a triblock copolymer was prepared using the procedure described in Example 8 except that the number average molecular weight of the second polyisoprene block was 5,900. Compositional data are summarised in Table 1.

### Example 11 (Comparison)

In this comparative example, a diblock copolymer was prepared using the procedure described in Example 8 except that the second addition of isoprene was omitted. The melt viscosity was 5.2 megapoise (x 10⁵ Pa s) at 121°C. Compositional data are summarised in Table 1.

### Example 12 (Comparison)

In this comparative example, a diblock copolymer was prepared using the procedure described in Example 1 except that the number average molecular weight of the first polyisoprene block was 106,000, the number average molecular weight of the polystyrene block was 44,000, and the second addition of isoprene was omitted. The melt viscosity was 2.6 megapoise (x 10⁵ Pa s) at 121°C. Compositional data are summarised in Table 1.

### Example 13 (Comparison)

In this comparative example, a triblock copolymer was prepared using the procedure described in Example 1 except that the number average molecular weight of the first polyisoprene block was 57,900, the number average molecular weight of the polystyrene block was 47,000, and the number average molecular weight of the second polyisoprene block was 55,000. Compositional data are summarised in Table 1.

### Examples 14-26

In these examples the polymers produced in Example 1-13 were used as VI improvers in a SAE 10W-40 multigrade lubricating oil composition. The base stock used in the preparation of the multigrade lubricating oil composition was a blend of an "HVI 100N" oil (trade designation, available ex Shell Oil Company, USA) (a bright and clear high viscosity index base oil having viscosity at 40°C of 20.0 to 21.0 mm²/s (ASTM D445), viscosity index of 88 to 93 (ASTM D2270) and minimum flash point of 190.6 to 196°C (ASTM D92)) and an "HVI 250N" oil (trade designation, available ex Shell Oil Company, USA) (a bright and clear high viscosity index base oil having viscosity at 40°C of 50.7 to 54.0 mm²/s (ASTM D445), viscosity index of 89 to 96 (ASTM D2270) and minimum flash point of 221°C (ASTM 92)). The amount of each VI improver was varied so as to provide a lubricating oil composition having a kinematic viscosity of 14 centistokes (mm²/s) at 100°C. The multigrade lubricating oil compositions prepared in these examples contained 8.5 %w of "HVI 250N", 11.5 %w of a commercially available API AG quality additive package (ECA 12850), 0.5% w "Acryloid 160" (Trade Mark) the identified polymer, and "HVI 100N". The viscosity index (VI), the cold cranking simulator (CCS) viscosity at -20°C, the engine oil pumpability (TP1) at -25°C using the mini-rotary viscometer (ASTM D4684), and the high temperature, high shear rate (HTHSR) viscosity at 150°C at 1 x 10⁶ seconds ⁻¹ in the tapered bearing simulator (TBS) (ASTM D4683) were determined for each oil composition.

All of these examples produced lubricating oil compositions from a concentrate of 6% w of the polymer in "HVI 100N".

The asymmetric polymers of the invention dissolved much quicker than the comparative samples and a separate evaluation established that the asymmetric polymers readily dissolve at significantly lower temperatures than the comparative polymers. For example, the asymmetric linear polymer of example 5 could be completely dissolved in oil at 78°C, whereas the S-EP polymers of example 4, 6, 11 and 12 required a blending temperature of 115°C for complete dissolution over a longer period of time. Also, at 7 percent or greater polymer-in-oil concentrates, the S-EP block copolymers of examples 6 and 12 show evidence of gellation at room temperature. At 9.3 %w in oil, the concentrate of the asymmetric EP-S-EP polymer of example 5 is fluid with no evidence of gelation at room temperature.

The data and results for the SAE 10W-40 formulations are summarised in Table 2.

### Examples 27-32

The fluidity of concentrates is determined by the measurement of viscosity at a low-shear-rate. When comparing polymer-in-oil concentrate viscosities, it is important to keep in mind the relative amount of the polymer that is required to achieve a specified kinematic viscosity in finished oil. For example, a 6 %w lubricating oil concentrate containing a higher molecular weight polymer such as of example 12, which requires less polymer for SAE 10W-40 multigrade in example 25, will have a higher concentrate viscosity than a 6 %w lubricating oil concentrate containing a lower molecular weight polymer such as of example 6, which requires more polymer for SAE 10W-40 multigrade in example 19.

Multigrade oils of example 14, 15, 17 and 19 in Table 2, which contain polymers of examples 1, 2, 4 and 6, require similar amounts of polymer. Their lubricating oil concentrate viscosities as measured in a Haake rotational viscometer at 82°C and 10 reciprocal seconds rate-of-shear are given in respect of examples 27-32 in Table 3.

### Examples 33-39

Multigrade oils of examples 21, 22, 23 and 25 as shown in Table 2, which contain polymers of examples 8, 9, 10 and 12, require similar amounts of polymer. The lubricating oil concentrate viscosities of these polymers as measured in a Haake rotational viscometer at 82°C and 10 reciprocal seconds rate-of-shear are given in respect of examples 33-39 in Table 4.

**TABLE 1**

| Ex. | Isoprene Mₙ' | Styrene Mₙ | Isoprene Mₙ'' | Melt Viscosity 121°C M Poise (x 10⁵ Pa s) |
|---|---|---|---|---|
| 1 | 60,900 | 42,100 | 9,100 | 4.9 |
| 2 | 60,900 | 42,100 | 14,300 | 3.4 |
| 3 | 60,900 | 42,100 | 3,700 | -- |
| 4 | 60,900 | 42,100 | 0 | 4.3 |
| 5 | 60,800 | 38,600 | 6,400 | 2.5 |
| 6 | 62,000 | 36,000 | 0 | 1.7 |
| 7 | 66,100 | 33,100 | 68,600 | 2.4 |
| 8 | 106,700 | 49,100 | 14,100 | 5 |
| 9 | 106,700 | 49,100 | 19,000 | 4.4 |
| 10 | 106,700 | 49,100 | 5,900 | -- |
| 11 | 106,700 | 49,100 | 0 | 5.2 |
| 12 | 106,000 | 44,000 | 0 | 2.6 |
| 13 | 57,900 | 47,000 | 55,000 | -- |

**TABLE 2**

| Ex. | Polymer Ex. | Polymer % W | CCS -20°C, cP (x 10⁻³ Pa s) | TP1 MRV, cP (x 10⁻³ Pa s) | VI | TBS cP(x 10⁻³ Pa s) |
|---|---|---|---|---|---|---|
| 14 | 1 | 1.19 | 2,880 | 12.7 | 164 | 3.46 |
| 15 | 2 | 1.19 | 2,860 | 12.7 | 163 | 3.51 |
| 16 | 3 | 1.18 | 2,810 | 13.3 | 164 | 3.44 |
| 17 | 4 | 1.24 | 2,800 | 13.1 | 164 | 3.46 |
| 18 | 5 | 1.20 | 2,960 | 14.8 | 163 | 3.40 |
| 19 | 6 | 1.18 | 2,920 | 14.1 | 163 | 3.40 |
| 20 | 7 | 0.98 | 2,870 | 13.2 | 167 | 3.62 |
| 21 | 8 | 0.80 | 2,960 | 12.5 | 162 | 3.27 |
| 22 | 9 | 0.81 | 2,760 | 12.5 | 162 | 3.32 |
| 23 | 10 | 0.80 | 2,930 | 12.6 | 163 | 3.23 |
| 24 | 11 | 0.86 | 2,920 | 12.5 | 165 | 3.23 |
| 25 | 12 | 0.78 | 2,840 | 13.5 | 159 | 3.26 |
| 26 | 13 | 1.13 | 2,820 | 13.9 | 165 | 3.67 |

**TABLE 3**

| Example | Polymer Example | Polymer %wt. | Haake vis., Poise (x 10⁻¹ Pas) |
|---|---|---|---|
| 27 | 1 | 6.0 | 5.4 |
| 28 | 1 | 8.0 | 12.6 |
| 29 | 2 | 6.0 | 4.8 |
| 30 | 2 | 8.0 | 16.5 |
| 31 | 4 | 6.0 | 20.3 |
| 32 | 6 | 6.0 | 19.4 |

**TABLE 4**

| Example | Polymer Example | Polymer %wt. | Haake vis., Poise (x 10⁻¹ Pas) |
|---|---|---|---|
| 33 | 8 | 6 | 20.7 |
| 34 | 8 | 8 | 36.3 |
| 35 | 9 | 6 | 15.2 |
| 36 | 9 | 8 | 29.0 |
| 37 | 10 | 6 | 17.8 |
| 38 | 10 | 8 | 36.1 |
| 39 | 12 | 6 | 31.6 |

## Claims

1. An asymmetric triblock copolymer, useful as a viscosity index (VI) improver, comprising polystyrene blocks (S) and hydrogenated polyisoprene blocks (EP) combined in molecules having the structure EP'-S-EP",
wherein EP' is a first block of hydrogenated polyisoprene having a number average molecular weight between 40,000 and 150,000 before hydrogenation,
S is a block of polystyrene having a number average molecular weight between 25,000 and 60,000,
EP" is second block of hydrogenated polyisoprene having a number average molecular weight between 2,500 and 30,000 before hydrogenation, and wherein the molecular weight ratio of EP'/EP" is at least 4.

2. The copolymer according to claim 1, wherein the number average molecular weight of EP' is between 50,000 and 110,000, the number average molecular weight of EP'' is between 3,000 and 18,000, and the molecular weight ratio of EP'/EP" is between 6.0 and 25.

3. The copolymer according to claim 1 or 2, wherein the number average molecular weight of the polystyrene block is between 35,000 to 50,000.

4. The copolymer according to any one of claims 1-3, wherein the EP' and EP'' blocks are at least 98% hydrogenated.

5. The copolymer according to claim 4, wherein less than 15% of the aromatic unsaturation is hydrogenated.

6. Process for preparing an asymmetric triblock copolymer as claimed in any one of claims 1-5, which comprises anionically polymerising isoprene in the presence of sec-butyllithium, adding styrene, and then more isoprene to the living polystyrene molecules to make the living block copolymer molecules, and selectively hydrogenating the polyisoprene blocks.

7. A lubricating oil composition comprising
a base oil and a viscosity improving amount of an asymmetric triblock copolymer as claimed in any one of claims 1-5.

8. A lubricating oil concentrate comprising 10 to 80%w, based on total concentrate, of an asymmetric triblock copolymer as claimed in any one of claims 1-5.

9. An asymmetric triblock copolymer comprising polystyrene blocks (S) and unhydrogenated polyisoprene blocks (EP) combined in molecules having the structure EP'-S-EP",
wherein EP' is a first block of unhydrogenated polyisoprene having a number average molecular weight between 40,000 and 150,000,
S is a block of polystyrene having a number average molecular weight between 25,000 and 60,000,
EP" is second block of unhydrogenated polyisoprene having a number average molecular weight between 2,500 and 30,000, and wherein the molecular weight ratio of EP'/EP" is at least 4.

## Patentansprüche

1. Asymmetrisches Dreiblockcopolymer, das als Viskositätsindex(VI)verbesserer geeignet ist, mit einem Gehalt an Polystyrolblöcken (S) und an Blöcken aus hydriertem Polyisopren (EP), kombiniert in Molekülen mit der Struktur EP'-S-EP",
worin EP' ein erster Block aus hydriertem Polyisopren mit einem zahlenmittleren Molekulargewicht von 40.000 bis 150.000 vor der Hydrierung ist,
S ein Block aus Polystyrol mit einem zahlenmittleren Molekulargewicht von 25.000 bis 60.000 ist,
EP" ein zweiter Block aus hydriertem Polyisopren mit einem zahlenmittleren Molekulargewicht von 2.500 bis 30.000 vor der Hydrierung ist und worin das Molekulargewichtsverhältnis EP'/EP" wenigstens 4 beträgt.

2. Copolymer nach Anspruch 1, worin das zahlenmittlere Molekulargewicht von EP' 50.000 bis 110.000 beträgt, das zahlenmittlere Molekulargewicht von EP" 3.000 bis 18.000 ausmacht und das Molekulargewichtsverhältnis EP'/EP" zwischen 6,0 und 25 liegt.

3. Copolymer nach Anspruch 1 oder 2, worin das zahlenmittlere Molekulargewicht des Polystyrolblocks 35.000 bis 50.000 beträgt.

4. Copolymer nach einem der Ansprüche 1 bis 3, worin die EP'-und EP"-Blöcke zu wenigstens 98 % hydriert sind.

5. Copolymer nach Anspruch 4, worin weniger als 15 % der aromatischen Unsättigung hydriert sind.

6. Verfahren zur Herstellung eines asymmetrischen Dreiblockcopolymers, wie in einem der Ansprüche 1 bis 5 beansprucht, welches ein anionisches Polymerisieren von Isopren in Gegenwart von sek.Butyllithium, ein Zusetzen von Styrol und anschließend von mehr Isopren zu den lebenden Polystyrolmolekülen zur Ausbildung der lebenden Blockcopolymermoleküle und ein selektives Hydrieren der Polyisoprenblöcke umfaßt.

7. Schmierölzusammensetzung mit einem Gehalt an einem Grundöl und an einer viskositätsverbessernden Menge eines asymmetrischen Dreiblockcopolymers nach einem der Ansprüche 1 bis 5.

8. Schmierölkonzentrat mit einem Gehalt an 10 bis 80 Gew.-%, bezogen auf das Gesamtkonzentrat, eines asymmetrischen Dreiblockcopolymers nach einem der Ansprüche 1 bis 5.

9. Asymmetrisches Dreiblockcopolymer mit einem Gehalt an Polystyrolblöcken (S) und an Blöcken aus unhydriertem Polyisopren (EP), vereinigt in Molekülen mit der Struktur EP'-S-EP",
worin EP' ein erster Block aus unhydriertem Polyisopren mit einem zahlenmittleren Molekulargewicht von 40.000 bis 150.000 ist,
S ein Polystyrolblock mit einem zahlenmittleren Molekulargewicht von 25.000 bis 60.000 ist,
EP" ein zweiter Block aus unhydriertem Polyisopren mit einem zahlenmittleren Molekulargewicht von 2.500 bis 30.000 ist und worin das Molekulargewichtsverhältnis EP'/EP" wenigstens 4 beträgt.

## Revendications

1. Copolymère triséquencé asymétrique, utile comme agent d'amélioration de l'indice de viscosité comprenant des séquences de polystyrène et des séquences de polyisoprène hydrogéné combinées (EP) en molécules possédant la structure EP'-S-EP",
dans laquelle EP' est une première séquence d'un polyisoprène hydrogéné possédant un poids moléculaire moyen en nombre compris entre 40.000 et 150.000 avant hydrogénation,
S est une séquence de polystyrène possédant un poids moléculaire moyen en nombre compris entre 25.00 et 60.000,
EP" est une seconde séquence de polyisoprène hydrogéné possédant un poids moléculaire moyen en nombre compris entre 2.500 et 30.000 avant hydrogénation et dans laquelle le rapport des poids moléculaires de EP'/EP" est d'au moins 4.

2. Copolymère suivant la revendication 1, caractérisé en ce que le poids moléculaire moyen en nombre de l'EP' est compris entre 50.000 et 110.000, le poids moléculaire moyen en nombre de l'EP" est compris entre 3.000 et 18.000 et le rapport des poids moléculaires de EP'/EP" est compris entre 6,0 et 25.

3. Copolymère suivant la revendication 1 ou 2, caractérisé en ce que le poids moléculaire moyen en nombre de la séquence de polystyrène est compris entre 35.000 et 50.000.

4. Copolymère suivant l'une quelconque des revendications 1 à 3, caractérisé en ce que les séquences d'EP' et d'EP" sont hydrogénées, à raison d'au moins 98%.

5. Copolymère suivant la revendication 4, caractérisé en ce que moins de 15% de l'insaturation aromatique sont hydrogénés.

6. Procédé de préparation d'un copolymère triséquencé asymétrique suivant l'une quelconque des revendications 1 à 5, caractérisé en ce que l'on soumet l'isoprène à une polymérisation anionique, en présence de sec-butyllithium, on ajoute du styrène et davantage d'isoprène aux molécules de polystyrène vivantes, pour réaliser les molécules de copolymère séquencé vivantes et on hydrogène sélectivement les séquences de polyisoprène.

7. Composition d'huile lubrifiante comprenant une huile de base et une quantité améliorant la viscosité d'un copolymère triséquencé asymétrique suivant l'une quelconque des revendications 1 à 5.

8. Concentré d'huile lubrifiante comprenant 10 à 80% en poids, sur base du concentré total, d'un copolymère triséquencé asymétrique, tel que revendiqué dans l'une quelconque des revendications 1 à 5.

9. Copolymère triséquencé asymétrique comprenant des séquences de polystyrène (S) et des séquences de polyisoprène non hydrogéné (EP) combinées dans des molécules possédant la structure EP'-S-EP",
où EP' est une première séquence de polyisoprène non hydrogéné possédant un poids moléculaire moyen en nombre compris entre 40.000 et 150.000,
S est une séquence de polystyrène possédant un poids moléculaire moyen en nombre compris entre 25.000 et 60.000,
EP" est une seconde séquence de polyisoprène non hydrogéné possédant un poids moléculaire moyen en nombre compris entre 2.500 et 30.000 et où le rapport des poids moléculaires EP'/EP" est d'au moins 4.
